Europäisches Patentamt

European Patent Office

Office européen des brevets

(19)

(11) Veröffentlichungsnummer: **0 055 867**
**B1**

# (12) EUROPÄISCHE PATENTSCHRIFT

(45) Veröffentlichungstag der Patentschrift:
05.08.87

(51) Int. Cl.⁴: **B 29 C 41/26,** B 29 C 47/14

(21) Anmeldenummer: **81110851.3**

(22) Anmeldetag: **30.12.81**

(54) **Vorrichtung zum Aufbringen einer dünnen Schicht eines Beschichtungsmaterials auf eine Materialbahn.**

(30) Priorität: **05.01.81 DE 3100101**

(43) Veröffentlichungstag der Anmeldung:
**14.07.82 Patentblatt 82/28**

(45) Bekanntmachung des Hinweises auf die Patenterteilung:
**05.08.87 Patentblatt 87/32**

(84) Benannte Vertragsstaaten:
**AT CH FR GB IT LI SE**

(56) Entgegenhaltungen:
**DE - A - 1 964 908**
**DE - B - 1 235 723**
**GB - A - 2 044 134**
**US - A - 4 180 541**

(73) Patentinhaber: **Bolton-Emerson, Inc., 9 Osgood Street,**
**Lawrence, Mass (US)**

(72) Erfinder: **Herzog, Peter, Ing. grad., Chemin de**
**Martinet 22, CH-1007 Lausanne (CH)**

(74) Vertreter: **Lehn, Werner, Dipl.-Ing. et al, Hoffmann, Eitle**
**& Partner Patentanwälte Arabellastrasse 4,**
**D-8000 München 81 (DE)**

## Beschreibung

Die Erfindung bezieht sich auf eine Vorrichtung zum Aufbringen einer dünnen Schicht eines Beschichtungsmaterials auf eine über eine Gegendruckwalze laufende Materialbahn mittels einer Schlitzdüseneinrichtung mit einer feststehenden einlaufenden Düsenlippe und einer ablaufenden Düsenlippe des Düsenschlitzes, bei der die ablaufende Düsenlippe als in einem Rakellager drehbarer Rakelstab ausgebildet ist, der durch federnde Mittel in das Rakellager gedrückt wird.

Eine Vorrichtung dieser Art ist durch die DE-A-1 964 908 bekannt geworden. Der Rakelstab wird dort durch einen an dem Rakelstab anliegenden Reinigungsspachtel mit variierbarem Anpressdruck in die halbzylinderförmige Auflage im Rakellager gedrückt. Zum Regulieren von Abweichungen in dem Abstand der Schlitzdüseneinrichtung zur Gegendruckwalze entlang der Breite der zu beschichtenden Materialbahn sind Spannvorrichtungen im Träger der Schlitzdüseneinrichtung vorgesehen. Infolge der grossen Biegesteifigkeit des Trägers ist eine feinfühlige Regulierung nicht möglich.

Der Erfindung liegt die Aufgabe zugrunde, eine Vorrichtung der eingangs beschriebenen Art zu schaffen, welche auf einfache Weise eine spielfreie Lagerung des Rakelstabes und eine feinfühlige und flexible Einstellung des Abstandes des Rakelstabs zur Gegendruckwalze über die Breite der Gegendruckwalze ermöglicht.

Diese Aufgabe wird erfindungsgemäss dadurch gelöst, dass das Rakellager zur Aufnahme des Rakelstabs eine U-förmige Nut aufweist, dass entlang der Nut verteilt im wesentlichen senkrecht zur Rakelstabachse verlaufende Bohrungen vorgesehen sind, die den Boden der Nut anschneiden, und dass in den Bohrungen Stellschrauben mit konischen Enden im Bereich der Nut vorgesehen sind, wobei die federnden Mittel eine Blattfeder sind, die den Rakelstab unter Vorspannung auf den Grund der Nut und die konischen Enden der Stellschrauben presst.

Mit dieser Ausbildung der erfindungsgemässen Vorrichtung lassen sich feinste Anpassungen des Rakelstabes an das Profil der Gegendruckwalze über deren gesamte Breite auch bei etwaigen Unebenheiten in der Gegendruckwalze erzielen. Der Rakelstab ist äusserst einfach ausbaubar, so dass auch leicht trocknende Beschichtungsmaterialien problemlos verarbeitet werden können. Weiter können im Bereich des Rakelstabes auf einfache Weise und gut zugänglich Heizungsbohrungen angebracht werden, ohne die Genauigkeit der Beschichtungsvorrichtung zu beeinflussen. Dadurch ist ein guter Wärmeübergang sichergestellt.

Die erfindungsgemässe Vorrichtung eignet sich insbesondere zur Verarbeitung von dünnflüssigen Beschichtungsmaterialien unter relativ geringem Druck.

Die konischen Enden der Stellschrauben weisen vorteilhaft einen Verjüngungswinkel von etwa 5° auf. Weiter sind zweckmässig Kontermuttern zum Fixieren der Stellschrauben vorgesehen.

Bei einer bevorzugten Ausführungsform der erfindungsgemässen Vorrichtung sind die Stellschrauben in Abständen von ca. 50 mm entlang der Nut angeordnet.

Die Blattfeder ist vorteilhaft aus nichtrostendem Messerstahl und am Rakellager durch Schrauben, Niederhalterblech und Stützrakel festgeklemmt.

Der Rakelstab selbst ist zweckmässig aus Stahl und die Gegendruckwalze mit einem elastischen Material wie Hartgummi, Kautschuk und dgl. beschichtet.

Um einen besonders gleichmässigen Auftrag von Beschichtungsmaterial zu erhalten, kann der Rakelstab auch als Spiralrakel ausgebildet sein.

Zweckmässig ist das Rakellager samt Rakelstab mittels Zug- und Druckschrauben in Richtung der einlaufenden Düsenlippe verstellbar.

Schliesslich ist die Schlitzdüseneinrichtung vorteilhaft neben der Gegendruckwalze zu dieser hin verstellbar und drehbar eingebaut. Dabei ist die einlaufende Düsenlippe der als Breitschlitzdüse ausgebildeten Schlitzdüse vorteilhaft als Dichtlippe ausgebildet.

Die Erfindung ist im folgenden an einem Ausführungsbeispiel anhand der Zeichnungen näher erläutert. In den Zeichnungen zeigen

Figur 1 eine Draufsicht auf eine Beschichtungsvorrichtung gemäss der Erfindung am Beispiel einer Vorrichtung mit segmentförmige Ausnehmungen aufweisendem, oszillierend angetriebenem Rakelstab, und

Figur 2 eine Seitenansicht der Schlitzdüseneinrichtung in der Vorrichtung nach Figur 1 im Schnitt und in vergrösserter Darstellung.

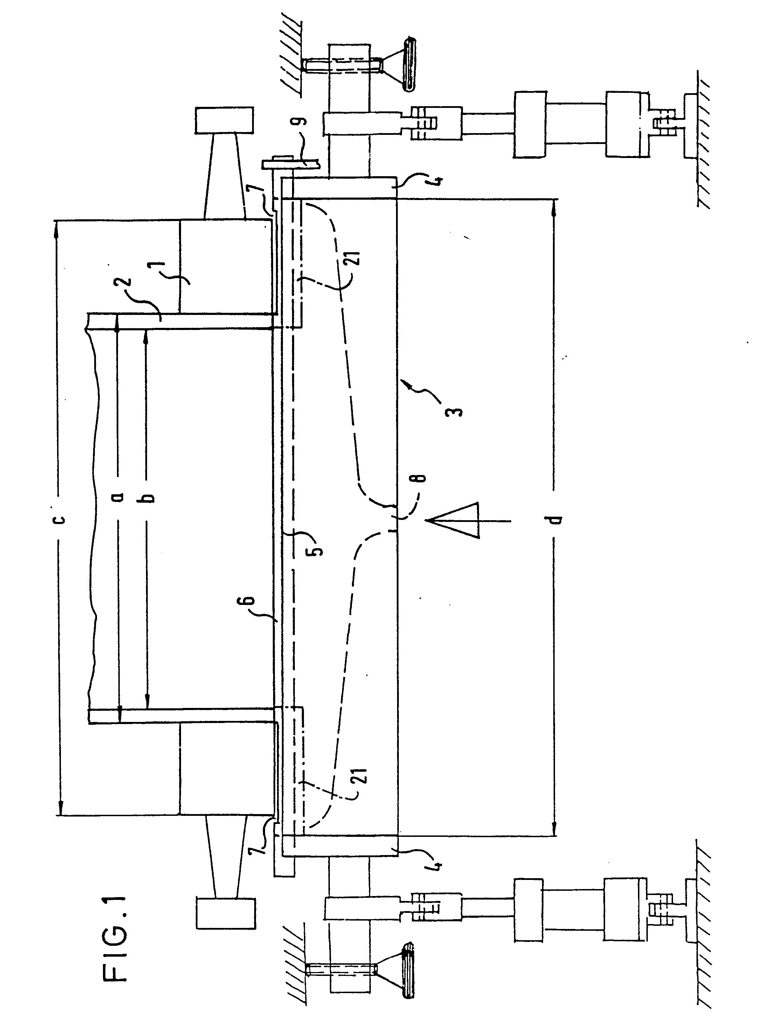

Die in Figur 1 dargestellte erfindungsgemässe Vorrichtung zum Aufbringen einer dünnen Schicht eines Beschichtungsmaterials weist eine Gegendruckwalze 1 auf, welche mit Kautschuk oder Hartgummi bezogen ist. Über die Gegendruckwalze 1 wird in Richtung des Pfeiles A eine zu beschichtende Materialbahn 2 mit einer Bahnbreite a geführt. Die Beschichtungsbreite b ist kleiner als die Bahnbreite a, während die Breite c der Gegendruckwalze 1 grösser als die Bahnbreite a ist.

Auf einer Seite der Gegendruckwalze 1 ist eine Schlitzdüseneinrichtung 3 mit einer feststehenden einlaufenden und einer ablaufenden Düsenlippe des Düsenschlitzes vorgesehen. Die Breite der Schlitzdüse ist mit d bezeichnet. Auf beiden Stirnseiten der Schlitzdüseneinrichtung sind Abschlussplatten 4 vorgesehen.

Zu beschichtende Materialbahnen 2 sind beispielsweise Papierbahnen, Kunststoffolien, Metallfolien, Gewebebahnen sowie Kombinationen derartiger Materialbahnen. So kann die Materialbahn 2 eine Aluminiumfolie mit 0,008 mm, 0,012 mm, 0,02 mm und bis zu 0,12 mm Dicke sein. Als Papierbahn kommen glatte, gestrichene, oder gekreppte Papiere von 40 bis 120 g/m² in Frage, als Kunststoffolien Polyäthylenfolien von 40 bis 120 mµ Dicke, biaxial gereckte, sogenannte orientierte Polypropylenfolien von 30 bis 120 mµ Dicke und Polyesterfolien im gleichen Dickenbereich. Weiter können als Materialbahnen zwei Hart-PVC-Folien und monomer sowie polymer weichgemachte PVC-Folien verarbeitet werden, und als Gewebebahnen beispielsweise Teppichverlegebänder und Verbandmaterialien.

Beschichtungsmaterialien sind unter anderem Paraffine und mikrokristalline Wachse mit Verarbeitungstemperaturen zwischen 75 °C und 100 °C bei Auftragsmengen zwischen 4 und 40 g/m². Weiter kommen in Frage Beschichtungsshotmelts, bestehend aus Äthylvinylacetat-Copolymeren, gemischt mit Paraffin und Harzen, bei Verarbeitungstemperaturen zwischen 140 °C und 190 °C für die Oberflächenveredelung von Verpackungsmaterial. Verwendete Schmelzhaftkleber haben Verarbeitungstemperaturen zwischen 140 °C und 190 °C bei Auftragsmengen zwischen 12 und 40 g/m², während Thermoset-Kleber bei Temperaturen von 70 °C bis 80 °C und Auftragsmengen ab 40 g/m² verarbeitet werden. Polyurethankleber, bestehend aus zwei Komponenten, werden kurz vor der Beschichtung gemischt.

Weitere Beschichtungsmaterialien sind wässrige Emulsionen und Dispersionen als PVDC-Beschichtung bei Raumtemperatur, Acrylatkleber als wässrige Dispersionen mit Beschichtung ebenfalls bei Raumtemperatur, verschiedene Stärkekleber, die bei Temperaturen von 70 °C bis 90 °C verarbeitet werden, Klebstoffe und Beschichtungsmassen, die in organischen Lösungsmitteln gelöst sind und bei Raumtemperatur verarbeitet werden und schliesslich Kaltleime PVC auf der Basis von Polyvinylalkohol.

Die einlaufende Düsenlippe 5 der Schlitzdüseneinrichtung 3 ist feststehend ausgebildet. Die ablaufende Düsenlippe der Schlitzdüse ist als drehbarer Rakelstab 6 ausgebildet. Der Rakelstab 6 weist ausserhalb der Bahnbreite a bis über die Walzenbreite c hinausreichende segmentförmige Ausnehmungen 7 auf, durch welche der Rakelstab 6 ähnlich einer Schlüsselfläche abgesetzt ist. Der Schlitzdüseneinrichtung 3 wird über einen Beschichtungsmaterialkanal 8 Beschichtungsmaterial zugeführt.

Der die ablaufende Düsenlippe bildende Rakelstab 6 wird über einen nicht dargestellten Getriebemotor samt Pleuel und ein fest mit dem Rakelstab 6 verbundenes Gestänge 9 derart oszillierend angetrieben, dass der Rakelstab 6 aufgrund seiner segmentförmigen Ausnehmungen 7 ausserhalb der Materialbahn 2 nicht in Berührung mit der Gegendruckwalze 1 kommen kann. Hierdurch wird eine Beschädigung der Gegendruckwalze 1 durch den Rakelstab 6 sicher vermieden, während gleichzeitig gewährleistet ist, dass kein Beschichtungsmaterial auf die Gegendruckwalze 1 austreten kann.

Der Pleuel lässt sich leicht von dem Gestänge 9 lösen, worauf der Rakelstab 6 einfach aus der Rakellagerung herausgezogen und durch einen einer geänderten Bahnbreite a angepassten Rakelstab ersetzt werden kann.

Der Getriebemotor hat eine Drehzahl von 9 bis 11 Umdrehungen pro Minute und ergibt eine entsprechend oszillierende Bewegung des Rakelstabs 6, wodurch der Rakeleffekt für die ablaufende Düsenlippe erreicht und damit eine Streifenbildung bei der Beschichtung sicher vermieden wird.

Die Schlitzdüseneinrichtung 3 kann durch einen nicht gezeigten Drehmechanismus derart gedreht werden, dass die feststehende einlaufende Düsenlippe 5 leicht an der Materialbahn 2 anliegt und eine Dichtwirkung erzielt, so dass kein Beschichtungsmaterial nach unten herausläuft und trotzdem keine nennenswerte Reibung zwischen den überstehenden Enden der Gegendruckwalze 1 und der Düsenlippe 5 entsteht.

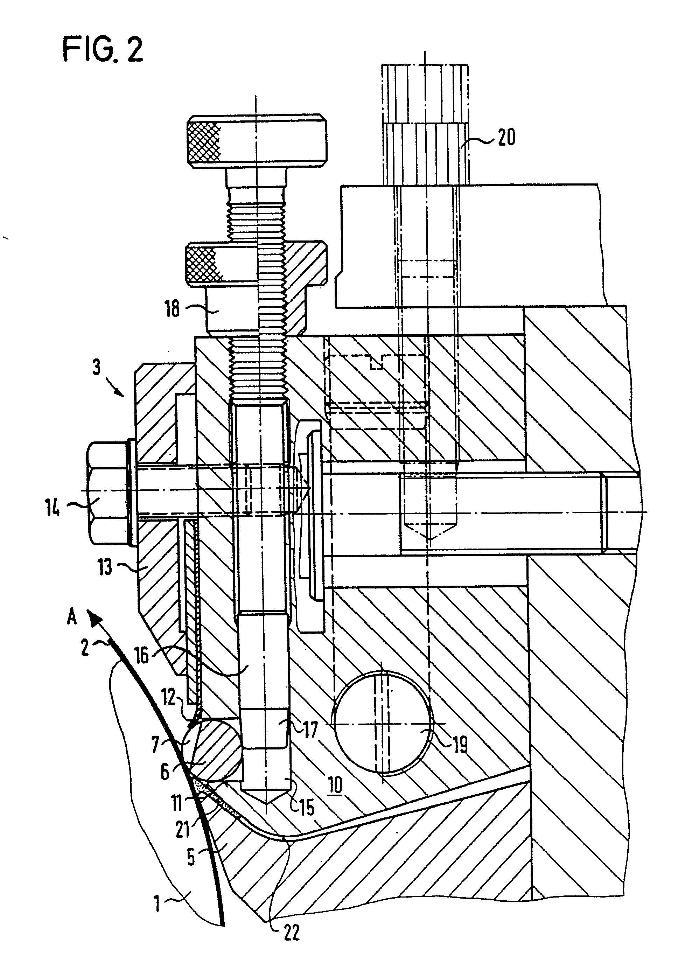

Der Aufbau der ablaufenden Düsenlippe ist am besten aus Figur 2 zu erkennen. Der Rakelstab 6 ist in einem Rakellager 10 gelagert. Das Rakellager 10 weist eine zur Gegendruckwalze 1 hin offene U-förmige Nut 11 auf, welche den Rakelstab 6 aufnimmt. Eine längs der Nut 11 verlaufende Blattfeder 12, vorzugsweise aus nichtrostendem Messerstahl, ist über eine Stützrakel-Klemmleiste 13 und Niederhalterblech mittels Schrauben 14 am Rakellager 10 festgeklemmt. Die Blattfeder 12 presst den Rakelstab 6 unter Vorspannung derart in die Nut 11, dass der Rakelstab 6 spielfrei in der Nut 11 gelagert ist. Zum Ein- und Ausbauen des Rakelstabs 6 lässt sich die Blattfeder 12 einfach von dem Rakellager 10 lösen.

In dem Rakellager 10 sind entlang der Nut 11 verteilt senkrecht zur Rakelstabachse verlaufende Bohrungen 15 vorgesehen, die den Boden der Nut 11 anschneiden. Die Bohrungen 15 sind in dem hier beschriebenen Ausführungsbeispiel in Abständen von ca. 50 mm entlang der Nut 11 angeordnet.

In den Bohrungen 15 sind Stellschrauben 16 mit konischen Enden 17 vorgesehen. Die Stellschrauben 16 sind mittels Kontermuttern 18 fixiert. Die konischen Enden 17 der Stellschrauben 16 weisen vorzugsweise einen Verjüngungswinkel von etwa 5° auf. Beim Verstellen der Stellschrauben 16 kommen die konischen Enden 17 in lagernden Kontakt mit dem elastischen Rakelstab 6, wodurch dieser feinfühlig über seine gesamte Länge an das Profil der Gegendruckwalze 1 anpassbar ist. Die spielfreie Lagerung des Rakelstabs 6 bleibt dabei erhalten. Da eine Anpassung des Rakelstabs 6 an das Profil der Gegendruckwalze 1 nicht mehr durch gezieltes Verbiegen des Rakellagers 10 selbst oder dessen Träger erfolgt, sondern vielmehr durch Verschieben der konischen Enden 17 der Stellschrauben 16 in den Bohrungen 15, kann ein Heiz- oder Kühlkanal 19 in unmittelbarer Nähe des Düsenschlitzes im Rakellager 10 vorgesehen werden, was einen guten Wärmeübergang gewährleistet.

Der Rakelstab 6 samt seinem Rakellager 10 kann mittels Zug- und Druckschrauben 20 zum Einspannen von Dichtstreifen 21 in den Zuführungsschlitz 22 zu der Düse, die den Düsenschlitz auf die Beschichtungsbreite begrenzen, unter Spannung zur einlaufenden Düsenlippe 5 hin und von dieser weg verschoben werden.

Mit der erfindungsgemässen Schlitzdüseneinrichtungen sind Beschichtungsmaterialien in einem Viskositätsbereich von dem von Wasser bis 25.000 Poise verarbeitbar. Die Auftragsgewichte liegen zwischen 1 und 400 g/m². 

Der Rakelstab 6 besteht normalerweise aus Stahl, während die Gegendruckwalze 1 mit Kautschuk beschichtet ist. Für Beschichtungen, die eine sehr gute Verteilung unabhängig von Schwankungen der Materialbahn 2 aufweisen sollen, werden als Rakelstab 6 Spiralrakel verwendet. Das Beschichtungsgewicht wird dann durch die Drahtdicke der Spiralrakel bestimmt. Rostfreie Klaviersaitendrähte können eingängig oder mehrgängig um den Rakelstab 6 gewickelt werden. Das Beschichtungsmaterial wird durch die entstehenden Zwischenräume zwischen den Drähten untereinander durchgepresst. Die Beschichtung weist jedoch feine Linien auf, welche nicht immer erwünscht sind. Bei Verwendung einer Spiralrakel als Rakelstab 6 müssen die im Rakellager befindlichen Windungen abgedichtet werden, damit das Beschichtungsmaterial nicht um den Rakelstab 6 herumlaufen kann und sich oberhalb des Rakelstabes 6 auf der Materialbahn 2 absetzt.

## Patentansprüche

1. Vorrichtung zum Aufbringen einer dünnen Schicht eines Beschichtungsmaterials auf eine über eine Gegendruckwalze (1) laufende Materialbahn (2) mittels einer Schlitzdüseneinrichtung (3) mit einer feststehenden einlaufenden Düsenlippe (5) und einer ablaufenden Düsenlippe des Düsenschlitzes, bei der die ablaufende Düsenlippe als in einem Rakellager drehbarer Rakelstab (6) ausgebildet ist, der durch federnde Mittel (12) in das Rakellager (10) gedrückt wird, dadurch gekennzeichnet, dass das Rakellager (10) zur Aufnahme des Rakelstabs (6) eine U-förmige Nut (11) aufweist, dass entlang der Nut (11) verteilt im wesentlichen senkrecht zur Rakelstabachse verlaufende Bohrungen (15) vorgesehen sind, die den Boden der Nut (11) anschneiden, und dass in den Bohrungen (15) Stellschrauben (16) mit konischen Enden (17) im Bereich der Nut (11) vorgesehen sind, wobei die federnden Mittel eine Blattfeder (12) sind, die den Rakelstab (6) unter Vorspannung auf den Grund der Nut (11) und die konischen Enden (17) der Stellschrauben (16) presst.

2. Vorrichtung nach Anspruch 1, dadurch gekennzeichnet, dass die konischen Enden (17) der Stellschrauben (16) einen Verjüngungswinkel von etwa 5° aufweisen.

3. Vorrichtung nach Anspruch 1 oder 2, dadurch gekennzeichnet, dass Kontermuttern (18) zum Fixieren der Stellschrauben (16) vorgesehen sind.

4. Vorrichtung nach einem der Ansprüche 1 bis 3, dadurch gekennzeichnet, dass die Stellschrauben (16) in Abständen von ca. 50 mm entlang der Nut (11) angeordnet sind.

5. Vorrichtung nach einem der Ansprüche 1 bis 4, dadurch gekennzeichnet, dass die Blattfeder (12) aus nichtrostendem Messerstahl und am Rakellager (10) durch Schrauben (14), Niederhalterblech und Stützrakel (13) festgeklemmt ist.

6. Vorrichtung nach einem der Ansprüche 1 bis 5, dadurch gekennzeichnet, dass der Rakelstab (6) aus Stahl und die Gegendruckwalze (11) mit einem elastischen Material wie Hartgummi, Kautschuk und dgl. beschichtet ist.

7. Vorrichtung nach einem der Ansprüche 1 bis 5, dadurch gekennzeichnet, dass der Rakelstab (6) eine Spiralrakel ist.

8. Vorrichtung nach einem der Ansprüche 1 bis 7, dadurch gekennzeichnet, dass das Rakellager (10) samt Rakelstab (6) mittels Zug- und Druckschrauben (20) in Richtung der einlaufenden Düsenlippe (5) verstellbar ist.

9. Vorrichtung nach einem der vorhergehenden Ansprüche, dadurch gekennzeichnet, dass die Schlitzdüseneinrichtung (3) seitlich neben der Gegendruckwalze (1) zu dieser hin verstellbar und drehbar eingebaut ist.

10. Vorrichtung nach Anspruch 9, dadurch gekennzeichnet, dass die einlaufende Düsenlippe (5) der Schlitzdüse als Dichtlippe ausgebildet ist.

## Claims

1. Apparatus for applying a thin layer of a coating material to a substrate (2) running over a back pressure roller (1) by means of a slot die means (3) with a stationary upstream die lip (5) and a downstream die lip of the die slot, in which the downstream die lip is formed as a rotatable doctoring rod (6) in a doctoring bearing, said rod (6) being pressed into the doctoring bearing (10) by spring means (12) characterized in that the doctoring bearing (10) has, for receiving the doctoring rod (6) a U-form groove (11), that holes (15) are provided distributed along the groove (11) and extending substantially perpendicular to the axis of the doctoring rod and cutting into the groove (11) and that in the holes (15), said screws (16) are provided with conical ends (17) in the region of the groove (11), wherein the spring means is a plate spring which is pretensioned to press the doctoring rod (6) onto the base of the groove (11) and the conical ends (17) of the said screws (16).

2. Apparatus according to claim 1 characterized in that the conical ends (17) of the said screws (16) have a taper angle of about 5°.

3. Apparatus according to claims 1 or 2 characterized in that locking nuts (18) are provided to fix the said screws (16).

4. Apparatus according to one of the claims 1 to 3 characterized in that the said screws (16) are arranged at intervals of about 50 mm along the groove (11).

5. Apparatus according to one of the claims 1 to 4 characterized in that the plate spring (12) is made of non-rusting knife steel and is clamped to the doctoring bearing (10) by screws (14), retaining plate and supporting doctor plate (13).

6. Apparatus according to one of the claims 1 to 5 characterized in that the doctoring rod (6) is made of steel and the back pressure roller (1) is coated with an elastic material such as hard rubber, rubber or similar.

7. Apparatus according to claims 1 to 5 characterized in that the doctoring rod (6) is a spiral doctoring blade.

8. Apparatus according to claims 1 to 7 characterized in that the doctoring bearing (10) including the doctoring rod (6) is adjustable in the direction of the upstream die lip (5) by means of tension and pressure screws (20).

9. Apparatus according to one of the previous claims characterized in that the slot die means (3) is mounted alongside the back pressure roller (1) and adjustable and rotatable thereto.

10. Apparatus according to claim 9, characterized in that the upstream die lip (5) of the slot die is formed as sealing lip.

## Revendications

1. Dispositif pour l'application d'une couche mince d'un matériau d'enduction sur une bande de matière (2) passant sur un cylindre de contre-pression (1), au moyen d'un agencement à buse à ouverture allongée (3) avec une lèvre amont fixe (3) et une lèvre aval, dans lequel la lèvre aval est constituée par une tige de râclage (6) montée tournante dans un palier de râclette dans lequel elle est poussée par un moyen élastique (12), caractérisé en ce que le palier de râclette (10) destiné à recevoir la tige de râclage (6) présente une rainure (11) en U, et que sont prévus répartis le long de la rainure (11) des trous (15) s'étendant sensiblement perpendiculairement à l'axe de la tige de réglage, qui intersectent le fond de la rainure (11), et que sont prévues dans ces trous (15) des vis de réglage (16) à partie extrême conique (17) dans la zone de la rainure (11), le moyen élastique étant un ressort à lame (12) qui presse sous précontrainte la tige de râclage (6) contre le fond de la rainure (11) et les parties extrêmes coniques (17) des vis de réglage (16).

2. Dispositif selon la revendication 1 caractérisé en ce que les parties extrêmes coniques (17) des vis de réglage (16) ont un angle de conicité d'environ 5°.

3. Dispositif selon la revendication 1 ou 2, caractérisé en ce que des contre-écrous (18) sont prévus pour bloquer les vis de réglage (16).

4. Dispositif selon l'une quelconque des revendications 1 à 3, caractérisé en ce que les vis de réglage (16) sont disposées le long de la rainure (11) à des intervalles d'environ 50 mm.

5. Dispositif selon l'une quelconque des revendications 1 à 4, caractérisé en ce que le ressort à lame (12) est en acier de coutellerie inoxydable et il est solidement calé dans le palier de râclette (10) au moyen de vis (14), d'un élément d'appui et d'une bride de serrage (13).

6. Dispositif selon l'une quelconque des revendications 1 à 5, caractérisé en ce que la tige de râclage (6) est en acier et le cylindre de contre-pression (1) est couvert d'une couche de matière élastique comme l'ébonite, le caoutchouc et les matières analogues.

7. Dispositif selon l'une quelconque des revendications 1 à 5, caractérisé en ce que la tige de râclage (6) est une râclette spiralée.

8. Dispositif selon l'une quelconque des revendications 1 à 7, caractérisé en ce que le palier de râclette (10) avec la tige de râclage (6) est réglable en position en direction de la lèvre amont (5) de la buse au moyen de vis de traction et de serrage (20).

9. Dispositif selon l'une quelconque des revendications précédentes, caractérisé en ce que l'agencement à buse à ouverture allongée (3) est monté latéralement à proximité du cylindre de contre-pression (1) et réglable en direction de celui-ci et déplaçable par rotation.

10. Dispositif selon la revendication 9, caractérisé en ce que la lèvre amont (5) de l'ouverture allongée de la buse est conformée en lèvre d'étanchéité.

FIG.1

0 055 867

FIG. 2